# FASCICULE DE BREVET EUROPEEN

(11) **EP 3 187 947 B1**
(45) Date de publication et mention de la délivrance du brevet: **09.06.2021**
(21) Numéro de dépôt: 16207005.6
(22) Date de dépôt: 27.12.2016
(51) Int. Cl.: G05B 19/418

(54) **SYSTÈME DE COMMANDE D'UN OUTIL INDUSTRIEL EN CALCULANT SA POSITION PAR RAPPORT À UN OBJET SE DÉPLAÇANT SUR UNE LIGNE D'ASSEMBLAGE**
STEUERUNGSSYSTEM EINES INDUSTRIELLEN WERKZEUGS DURCH BERECHNUNG SEINER POSITION IN BEZUG AUF EIN OBJEKT, DAS SICH AUF EINER MONTAGESTRASSE BEWEGT
SYSTEM FOR CONTROLLING AN INDUSTRIAL TOOL BY CALCULATING THE POSITION THEREOF RELATIVE TO AN OBJECT MOVING ON AN ASSEMBLY LINE

(30) Priorité: 29.12.2015 FR 1563431
(43) Date de publication de la demande: 05.07.2017
(73) Titulaire: Etablissements Georges Renault, 44800 Saint Herblain (FR)
(72) Inventeur: MACQUET, Laurent, 44240 La Chapelle Sur Erdre (FR)
(74) Mandataire: Vidon Brevets & Stratégie

(56) Documents cités:
- WO-A1-01/38897
- US-A1- 2015 018 999

## Description

### 1. Domaine de l'invention

L'invention concerne le contrôle d'outils portables industriels et la capacité de calculer leurs positions par rapport à la position d'un objet se déplaçant sur une ligne d'assemblage. Plus précisément, l'invention concerne le fait que les paramètres de fonctionnement de l'outil dépendent de l'endroit où il se situe par rapport à l'objet, quel que soit la position de ce dernier sur la ligne d'assemblage.

### 2. Art antérieur

Le contexte de l'invention est celui de l'utilisation d'outils dans des lignes d'assemblages industrielles, tel que des lignes de production de voitures. Les outils concernés sont par exemple des outils de vissage utilisés dans le cadre de la production industrielle. Ce type d'industrie utilise des systèmes de vissage permettant un traçage de la qualité de toutes les opérations de production. Ceci a amené le développement de systèmes de vissage capable d'assurer des cycles de vissage intégrant de multiples étapes faisant varier des paramètres de vissage tels que :
- la vitesse de rotation (différente suivant la phase de vissage : prévissage ou montée en couple).
- la stratégie de serrage: objectif de couple, d'angle ou à la limite élastique.

Ces systèmes de vissage peuvent aussi être programmés pour fournir un compte rendu de vissage global pour un groupe de plusieurs serrages et pour réaliser un enchaînement de différents vissages avec différentes stratégies de serrage. Ces systèmes permettent aussi d'exporter sur les réseaux informatiques de ces entreprises les résultats de serrage, couple, angle, intensité moteur, etc, associés au numéro du véhicule ayant reçu ce serrage. Les systèmes de vissage actuellement sur le marché mémorisent les paramètres d'utilisation et les éventuels comptes rendus d'exécution, et les associent aux pièces produites. Il est ainsi possible de tracer le procédé de fabrication et de retrouver par la suite les caractéristiques de production d'une pièce.

Les visseuses portables peuvent être reliées par un câble à un contrôleur fournissant à l'outil la puissance électrique nécessaire et assurant une communication pour le transfert des paramètres permettant le pilotage de l'outil en terme de stratégie de vissage et l'exportation des résultats vers les réseaux informatiques. Les visseuses peuvent également comporter une batterie et communiquer par radio avec le contrôleur. Dans tous les cas, l'opérateur déplace son outil et en appuyant sur sa gâchette, déclenche un cycle de vissage qui dépend de l'objet à visser et donc de l'endroit de l'objet mis sur la ligne d'assemblage où ce vissage s'effectue.

L'utilisation de visseuse à batterie introduit un risque par rapport à l'utilisation de visseuse à câble : celui de voir l'outil être utilisé autre part qu'à l'endroit dédié aux opérations d'assemblage pour laquelle il a été installé, autrement dit, d'une part un risque de serrer des vis avec une stratégie inadaptée et d'autre part, un risque de renvoyer sur les réseaux informatiques des résultats de serrage associés à un numéro de voiture qui n'est pas celui sur laquelle a été réalisé le vissage. Pour pallier à ce risque, des systèmes de localisation de visseuse ont été développés, ils permettent d'identifier la position de l'outil et d'autoriser son fonctionnement uniquement s'il se trouve dans l'espace dédié aux opérations pour lesquelles la visseuse a été installée. Différentes technologies de localisation peuvent être utilisées en milieu industriel : radio haute fréquence (par exemple « Ultra Large Bande », ULB en abrégé), caméra et reconnaissance visuelle, centrale inertielle. La précision de ces moyens de localisation est de l'ordre du centimètre.

La demande FR 3 010 927 publiée le 27 mars 2015 et déposée par la demanderesse décrit un système de calibration d'un système de localisation d'un outil permettant de prédéfinir des espaces dans lequel l'outil sera autorisé à fonctionner. L'outil est placé à des points dans l'espace définissant des volumes d'utilisations, la détermination des coordonnées de chaque point et leurs enregistrements dans le contrôleur associé au système de localisation s'effectuent lorsque l'opérateur appuie sur la gâchette de l'outil.

Le convoyeur est généralement constitué par une structure fixe intégrée au niveau du sol de l'usine et supportant les équipements de production de chaque station de travail, ainsi que les alimentations électriques, pneumatiques et informatiques ; et une structure roulante qui permet de déplacer les véhicules ou les objets à assembler à travers les stations de travail. Cette structure roulante est de préférence guidée par des rails portés par la structure fixe. Elle se présente comme une chaîne sans fin entrainée par un motoréducteur de forte puissance. Cette chaîne est constituée de pas d'une longueur équivalente à celle des stations de travail. Le pas est dimensionné en fonction des véhicules ou pièces à transporter.

Chaque pas de cette chaîne comporte un élément fixé sur le pas et destiné à activer des capteurs fixes disposés sur la structure. Ces capteurs sont destinés à détecter l'arrivée du pas aux endroits suivants : l'entrée de station, le seuil d'alerte et la sortie de station. Ces capteurs peuvent être de différentes technologies : optique, inductif, capacitif ou mécanique. Si l'objet en cours de fabrication est détecté entre un seuil d'alerte et la sortie de station alors une alerte visuelle et/ou sonore est déclenchée, de façon que l'opérateur présent dans la station en soit informé et qu'il sache qu'il lui reste peu de temps pour terminer son travail.

Durant la vie de la ligne d'assemblage, il peut être nécessaire de faire varier la position géographique de ces limites. Ceci peut être motivé par les évolutions des moyens de production propres à chaque station ou encore à un changement des véhicules ou des objets à assembler. Un tel événement oblige l'opérateur de maintenance à modifier le positionnement de ces capteurs dans la structure fixe du convoyeur. Cette opération suppose un arrêt de la ligne d'assemblage et donc une perte de productivité.

Le document US 2015/018999, publié le 15 Janvier 2015 décrit une chaîne d'assemblage de véhicules automobiles dotée d'outils de montage. Chaque outil dispose d'une puce RFID pour sa calculer sa localisation, les coordonnées spatiales sont transmises aux contrôleurs des outils qui calculent des commandes en fonction de leurs positions. Un scanneur optique détermine la position du véhicule sur la chaîne de montage et la transmet à un contrôleur principal. La multiplicité des équipements rend complexe l'installation.

Le document WO 01/38897, publié le 31 Mai 2001, décrit également une chaîne d'assemblage de véhicules dans laquelle des ouvriers manipule des outils de montage. Le poste de travail possède des émetteurs de signaux ultrasonores et l'outil dispose d'un microphone qui recevoir lesdits signaux. Il est ainsi possible de déterminer la position de l'outil par triangulation et de définir les commandes. L'identification de la voiture s'effectue à l'entrée de la chaîne par la lecture optique de son numéro de châssis, la position de la voiture étant déterminée approximativement à partir du temps et de la vitesse d'avancement. Les commandes des outils dépendent de leurs position et non de celle du véhicule.

L'utilisation des capteurs de proximité ou des codeurs de position nécessite une installation fixe et du câblage. Chaque modification de la ligne pour agrandir ou réduire une station nécessite une intervention sur la ligne de maintenance. Ces solutions sont peu flexibles et coûteuse en termes de maintenance et longues à mettre en œuvre.

### 3. Inconvénient de l'art antérieur

La définition des endroits de l'objet à assembler où l'outil peut être utilisé prend en compte le fait que ces endroits se déplacent continuellement dans la ligne d'assemblage. Les moyens connus pour localiser l'objet à assembler sont coûteux, peu précis et nécessite une intervention lourde lors des modifications de la ligne d'assemblage. Dans ces circonstances, il est intéressant de trouver d'autres moyens pour localiser l'outil par rapport à la position actuelle de l'objet en cours de déplacement.

### 4. Objectifs de l'invention

L'invention a notamment pour objectif de pallier les inconvénients de l'art antérieur. Un objectif de la présente invention consiste en un système de commande d'un outil destiné à être utilisé sur une ligne d'assemblage, qui peut facilement s'adapter à des modifications de la position des outils sur une même ligne d'assemblage, et en fonction de l'objet à produire. Un autre objectif consiste à minimiser les coûts en diminuant le nombre d'équipements présents sur la ligne d'assemblage.

### 5. Exposé de l'invention

Ces objectifs, ainsi que d'autres qui apparaîtront par la suite, sont atteints grâce à l'invention qui a pour objet un système de commande d'un outil comprenant un contrôleur contrôlant le fonctionnement d'un outil et un moyen de détermination sans contact des positions absolues de transpondeurs fixés sur ledit outil et un objet mobile sur lequel l'outil opère, l'objet mobile effectuant un parcours passant par une succession de positions déterminées dans une ligne d'assemblage. Le contrôleur autorise le fonctionnement de l'outil dans la ligne d'assemblage lorsque le transpondeur de l'outil se trouve dans un premier espace prédéfini détecté par ledit moyen de détermination de position absolue, ce premier espace prédéfini se situant entre une première position déterminée et une cinquième position déterminée, et lorsque le transpondeur de l'objet mobile se trouve également entre une seconde position déterminée et une quatrième position déterminée détectées par ledit moyen de détermination de position absolue, la seconde position et la quatrième position déterminées étant encadrées par la première position et la cinquième position déterminées.

De cette manière, l'activation de l'outil s'effectue en utilisant les informations générées par le même moyen de localisation, ce qui simplifie l'installation et minimise les coûts. L'outil est activé lorsque celui-ci se trouve dans un certain espace prédéfini et lorsque l'objet mobile se trouve également dans un même espace prédéfini.

Selon un cas particulier de réalisation, la première position déterminée est au même emplacement que la seconde position déterminée et/ou la quatrième position déterminée est au même emplacement que la cinquième position déterminée. Ce cas particulier intervient notamment si l'objet à fabriquer est d'une taille similaire à celle de l'outil.

Selon un autre mode de réalisation, le système comporte en outre un moyen d'émission d'un signal lumineux et/ou sonore activé lorsque ledit transpondeur de l'objet dépasse une troisième position déterminée et lorsque les opérations à réaliser entre la seconde position et la troisième position déterminées n'ont pas été effectuées, la troisième position se trouvant entre la seconde position et la quatrième position déterminées dans la ligne d'assemblage.

Selon un autre mode de réalisation, les positions sont définies en plaçant l'outil à un endroit déterminé, et à introduire une commande au niveau d'une interface utilisateur déclenchant l'acquisition de la localisation du transpondeur dudit outil et l'association des coordonnées de localisation ainsi générées avec les positions ainsi déterminées.

Selon un autre mode de réalisation, le moyen de détermination de position capte un code en provenance du transpondeur placé sur l'objet, le code identifiant ledit objet étant au moins associé à des mesures réalisées lors des opérations effectuées par l'outil sur ledit objet mobile.

Selon un autre mode de réalisation, le moyen de détermination de position capte un code en provenance du transpondeur placé sur l'outil, le code identifiant ledit outil étant pris en compte dans le choix des paramètres appliqués à cet outil lors des opérations sur l'objet mobile.

Selon un autre mode de réalisation, le moyen de détermination de position comporte une pluralité de caméras filmant le parcours de l'objet mobile, les images ainsi produites sont analysées pour détecter la position de l'objet mobile et de l'outil.

Selon un autre mode de réalisation, l'objet mobile se déplace sur un convoyeur.

### 6. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 montre un exemple d'un système de commande d'un outil industriel avec géolocalisation sur une ligne d'assemblage,
- la figure 2 présente la position d'un véhicule se situant à l'entrée d'une station de travail d'une ligne d'assemblage,
- la figure 3 présente la position d'un véhicule se situant à l'extérieur de la station de travail et un outil se situant dans un espace proche de la station,
- la figure 4 présente la situation d'un véhicule et un outil se trouvant tout deux dans une station d'opération, l'outil étant opérationnel,
- la figure 5 présente la situation d'un véhicule qui est proche de la sortie de la station de travail, l'outil étant opérationnel,
- la figure 6 présente la position d'un véhicule se situant à l'extérieur de la station de travail et un outil se situant dans un espace proche de la station.
- la figure 7 présente la situation où un véhicule a quitté complétement la station.

### 7. Description d'un mode de réalisation de l'invention

### 7.1 Principe général

La présente invention concerne un système de commande d'un outil comprenant un contrôleur contrôlant le fonctionnement d'un outil et un moyen de détermination sans contact des positions absolues de transpondeurs fixés sur ledit outil et un objet mobile sur lequel l'outil opère. L'objet mobile effectue un parcours passant par une succession de positions déterminées dans une ligne d'assemblage. Le contrôleur autorise le fonctionnement de l'outil dans la ligne d'assemblage lorsque le transpondeur de l'outil se trouve dans un premier espace prédéfini détecté par ledit moyen de détermination de position absolue, ce premier espace prédéfini se situant entre une première position déterminée et une cinquième position déterminée, et lorsque le transpondeur de l'objet mobile se trouve également entre une seconde position déterminée et une quatrième position déterminée détectées par ledit moyen de détermination de position absolue. La seconde position et la quatrième position déterminées sont encadrées par la première position et la cinquième position déterminées.

De cette manière, l'activation de l'outil s'effectuent en utilisant les informations générées par le même moyen de localisation, ce qui simplifie l'installation et minimise les coûts.

### 7.2 Description d'un système de commande d'un outil industriel

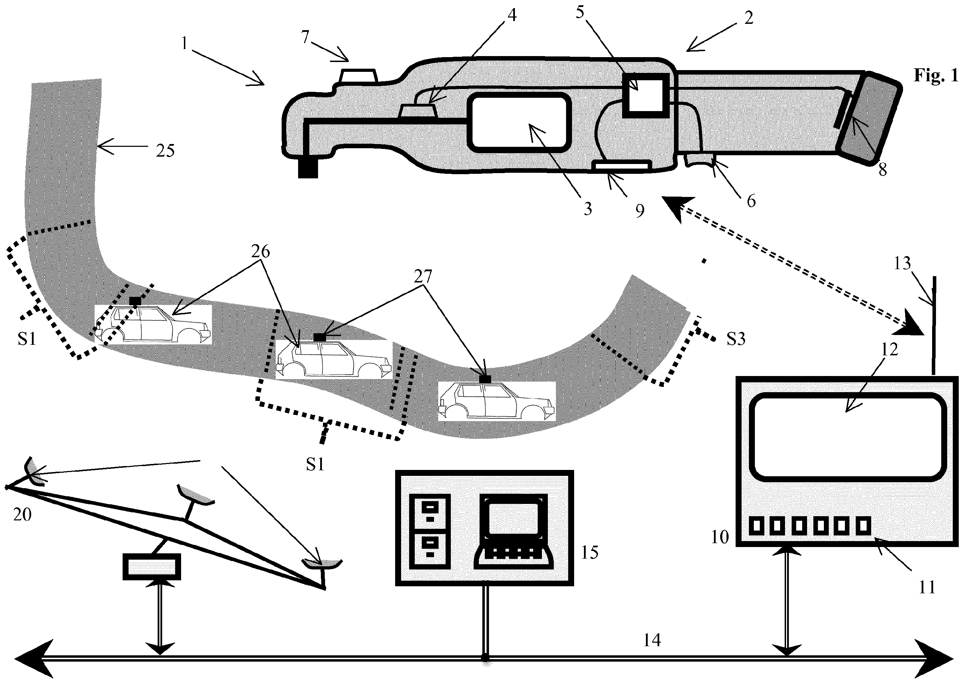

La **Fig.1** décrit un exemple d'un système de commande permettant de contrôler le fonctionnement d'un outil en utilisant des techniques de géolocalisation. Selon un mode préféré de réalisation, le système comporte un outil industriel 1 géolocalisé, un contrôleur 10 destiné à contrôler le fonctionnement de cet outil, un dispositif de géolocalisation 20 et une ligne d'assemblage 25 sur laquelle des objets géolocalisés se déplacent.

Les lignes d'assemblage, telles que des chaînes de production de voitures, comportent des stations utilisant des outils industriels. Un outil industriel 1 est par exemple une visseuse électrique à serrage asservi qui est classiquement mise en œuvre pour assurer, au cours d'une opération de vissage, le serrage d'un assemblage, c'est à dire la liaison de plusieurs pièces au moyen par exemple d'une vis serrée selon un couple dont la valeur est choisie de façon que l'assemblage soit suffisamment rigide mais avec un couple maximal pour ne pas endommager ladite vis. Le couple de serrage cible est un exemple de paramètres d'utilisation de l'outil. D'autres paramètres d'utilisation peuvent être définis tels qu'un angle de serrage cible ou la détection du franchissement de la limite élastique de la vis.

Une telle visseuse comprend généralement un carter 2 comprenant une poignée et contenant notamment les éléments suivants :
- un moteur 3 muni d'un rotor animant un organe terminal susceptible de porter un embout de vissage,
- différents capteurs 4 dont un capteur de couple notamment destiné à détecter l'atteinte d'un couple objectif,
- un moyen de contrôle 5 commandant en continu le moteur et recevant des capteurs 4 des informations sur l'opération en cours,
- un moyen de commande de l'outil 6 permettant à un opérateur d'utiliser cet outil, ce moyen de commande est typiquement une gâchette électrique,
- un transducteur de géolocalisation 7 fixé sur l'outil, de préférence à proximité immédiate de l'embout de vissage, ce transducteur permet de localiser avec précision l'endroit où cet outil opère,
- une batterie 8,
- un module émetteur récepteur 9 permettant la communication radio (réseau Wifi par exemple) de façon bidirectionnelle avec son contrôleur 10 via le moyen 13.

Le contrôleur 10 comporte une unité centrale associée à un programme d'exécution, et une interface utilisateur pour gérer un moyen d'introduction de commande 11 (clavier, écran tactile, souris, ...), un moyen d'affichage 12 (écran, afficheur, voyant lumineux) et éventuellement, un moyen d'émission d'un signal sonore sur une fréquence audible. Le contrôleur 10 comporte un moyen de communication radio 13 avec l'outil permettant à l'outil de recevoir du contrôleur les paramètres et autorisation de serrage et d'émettre vers le contrôleur les résultats de serrage : couple appliqué sur la vis, angle, etc. Le contrôleur comporte en outre une liaison bidirectionnelle 14 avec un réseau informatique pour la transmission de données. Le réseau 14 est géré par au moins un serveur 15 qui peut assurer la gestion des contrôleurs de toute la ligne d'assemblage.

Selon un exemple préféré de réalisation, le système de commande dispose d'un dispositif de géolocalisation 20 permettant la localisation d'au moins les transpondeurs présents sur une au moins station de travail de la ligne d'assemblage 25. Ces transpondeurs sont placés sur les éléments mobiles, c'est à dire au moins un outil 1 et les objets 26 se déplaçant sur la ligne d'assemblage. Selon un mode préféré de réalisation, le dispositif de localisation utilise une émission radiofréquence, la détection s'effectue par triangulation en analysant les temps de communication avec chaque transpondeur. Le contrôleur autorisant le fonctionnement de l'outil dans le processus d'assemblage en fonction. Selon un perfectionnement, la précision de la géolocalisation est améliorée par l'implémentation d'une centrale inertielle dans l'outil. Cette centrale inertielle est alors intégrée dans l'outil et/ou dans l'objet mobile.

Selon un autre mode de réalisation, des marqueurs visuels sont placés sur les éléments mobiles. Le dispositif de géolocalisation 20 comporte une pluralité de caméras filmant le parcours des éléments mobiles. Les images produites par les caméras sont analysées pour détecter la position de marqueurs visuels placés sur les éléments mobiles 1 et 26. Les caméras sont disposées dans des endroits différents et selon des orientations différentes. Les positions respectives d'un même marqueur visuel dans les images permettent de calculer la localisation absolue de ce marqueur visuel.

Par la suite, un « transpondeur » désigne tout élément dont la position est détectée par le dispositif de localisation 20. Dans tous les cas, le capteur (radio, visuel, ...) du dispositif de géolocalisation est fixe et la localisation des transpondeurs est déterminée par rapport au sol, la position étant en cela qualifié d'« absolue », en d'autres termes elle ne dépend pas de la position du convoyeur.

La ligne d'assemblage 25 comporte de préférence un convoyeur capable de déplacer une pluralité d'objets 26 à fabriquer, typiquement des voitures. Ce convoyeur dispose de plusieurs plateaux se déplaçant à la queue leu leu, et supportant l'objet 26 qui s'assemble tout au long de la ligne d'assemblage. Au cours de son déplacement, chaque plateau du convoyeur traverse une succession de stations (S1, S2, ... Sn. Un opérateur est chargé à chaque station de réaliser une tâche, il dispose d'au moins un outil destiné à effectuer plusieurs opérations d'assemblage sur l'objet. Le convoyeur ne s'arrêtant pas, l'opérateur doit suivre le mouvement de l'objet tout en manipulant son outil pour exécuter les opérations prévues. Selon l'invention, au moins un transpondeur 27 est placé sur chaque objet 26, le dispositif de géolocalisation 20 permettant à la fois de localiser l'outil et l'objet.

Selon un mode préféré de réalisation, le dispositif de géolocalisation 20 communique par une liaison filaire avec le contrôleur 10 et lui transmet la localisation de tous les transpondeurs placés sur des éléments mobiles (outils et objets présents dans la station). De cette façon, le contrôleur reçoit les positions absolues de l'outil qu'il est chargé de contrôler, et de l'objet sur la ligne d'assemblage.

Selon un mode préféré de réalisation, le contrôleur reçoit du dispositif de géolocalisation les coordonnées de l'objet mobile et/ou de l'outil. Il commande alors l'outil en fonction des positions de chacun. Selon une variante de réalisation, le contrôleur transmet les coordonnées reçues à un serveur distant qui les traite et en déduit le fonctionnement de l'outil. Un signal de commande vers le contrôleur de l'outil est alors émis par ledit serveur distant.

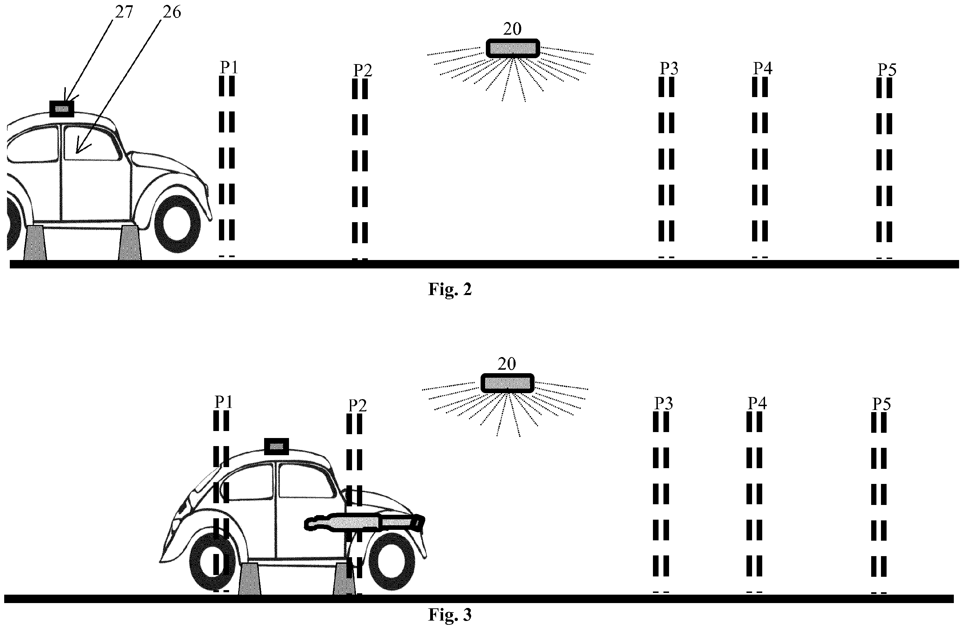

Nous allons maintenant expliciter un second niveau de contrôle consistant à vérifier que l'objet 26 se situe bien dans une station pour autoriser l'exécution des opérations de l'outil. Ces explications sont illustrées par les **Fig. 2, 3****,** **4, 5** et **6** qui montrent le déplacement d'un objet au sein de la ligne d'assemblage.

Un objet se déplaçant au travers d'une station d'assemblage passe par 3 positions prédéfinies : le seuil d'entrée d'objet sur station P2, le seuil d'alerte P3 et le seuil de sortie d'objet de station P4.

Ces seuils sont compris dans l'espace de la station de travail qui est lui encadré par 2 seuils de début P1 et de fin P5.

Lors de l'installation de la chaine d'assemblage, le technicien définit préalablement la position dans l'espace de ces seuils P1, P2, P3, P4 et P5 suivant le procédé décrit dans la demande de brevet FR 3 010 927, déjà cité dans le préambule. P2 définit la position du transpondeur de la voiture au moment où son arrière passe P1. P4 définit la position du transpondeur de la voiture au moment où son avant passe P5. P3 positionné entre P2 et P3 définit la position du transpondeur de la voiture au moment où il est temps pour l'opérateur de terminer sa tâche.

Cette opération de calibration peut consister à placer l'outil 1 à l'endroit précis d'un seuil virtuel, à introduire une commande au niveau du contrôleur pour déterminer la position de cet outil et à l'affecter au seuil d'entrée. Une opération identique permet de déterminer la position de l'ensemble des seuils.

Les seuils virtuels permettent de distinguer différents espaces prédéfinis :
- entre les seuils P1 et P5,
- entre les seuils P3 et P4,
- entre les seuils P4 et P5.

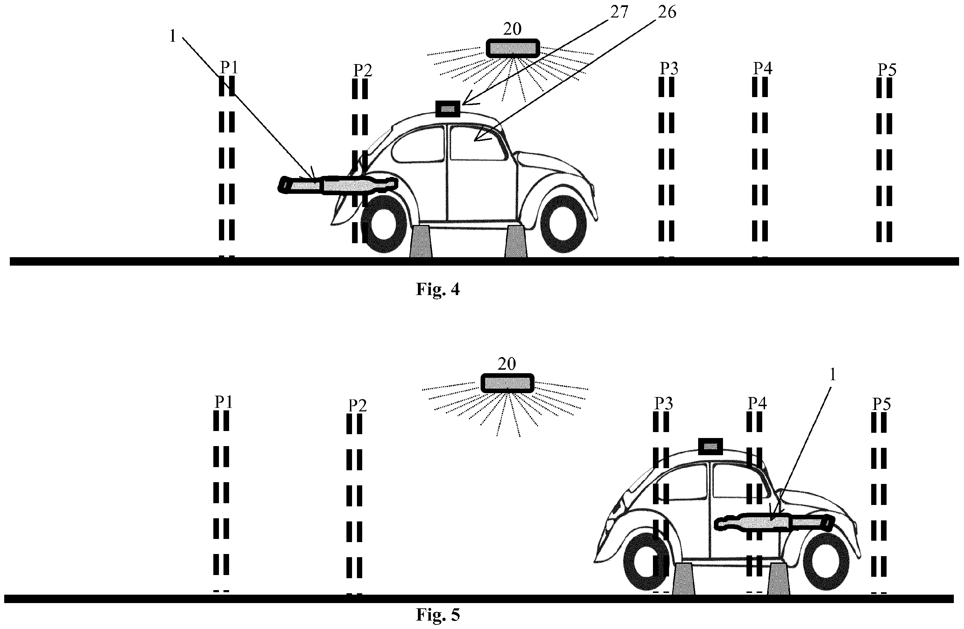

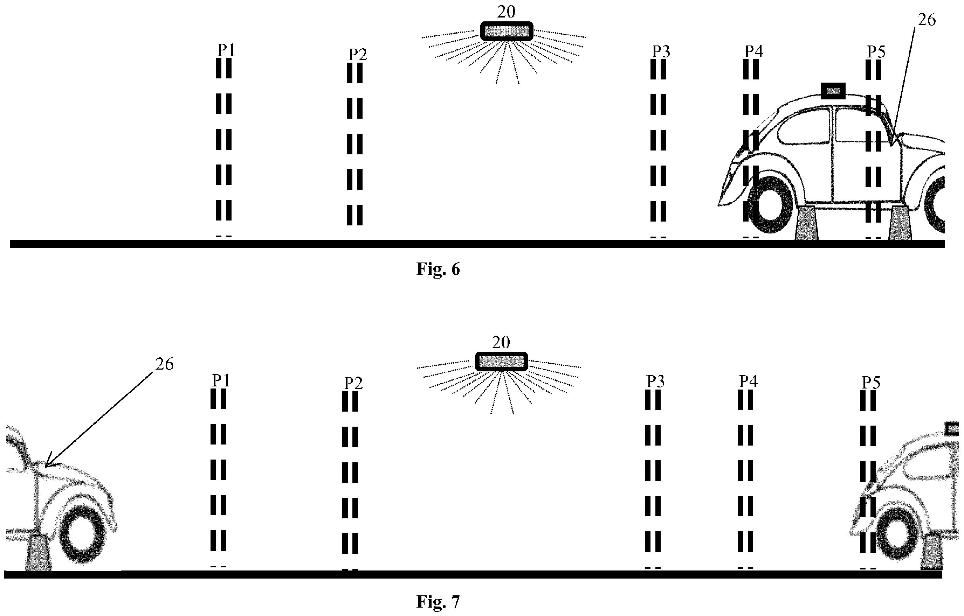

Les seuils P2, P3 et P4 sont utilisés pour définir la position du transpondeur 27 porté par l'objet, et donc l'objet lui-même. Lorsque le transpondeur 27 est détecté avant P2, comme l'illustre les Fig. 2 et Fig. 3, l'opérateur n'est pas autorisé à réaliser les opérations prévues, et le système de commande de l'outil interdit son fonctionnement. Lorsque le transpondeur 27 est détecté entre les seuils P2 et P3, comme l'illustre la **Fig. 4****,** l'opérateur est supposé réaliser les opérations de production qui lui incombe, et le système de commande de l'outil autorise son fonctionnement dans la mesure où l'outil se trouve entre P1 et P5. Lorsque le transpondeur 27 se trouve entre P3 et P4, comme l'illustre la **Fig. 5****,** le système de commande de l'outil autorise toujours le fonctionnement de l'outil dans la mesure où l'outil se trouve entre P1 et P5, et alerte l'opérateur de l'urgence de terminer les opérations prévues. Lorsque le transpondeur 27 passe P4, comme le montrent les **Fig. 6** et **7****,** deux cas sont à envisager :
- si les opérations prévues n'ont pas été réalisées alors : soit la ligne d'assemblage s'arrête pour laisser le temps à l'opérateur de terminer les opérations prévues, soit une requête de correction différée est enregistrée.
- si les opérations prévues ont été réalisées correctement, la ligne d'assemblage portant l'objet poursuit son déplacement.

Selon un mode préféré de réalisation, la station dispose de deux seuils P1 et P5 qui délimitent l'espace d'évolution de l'outil, cet espace étant censé contenir celui dans lequel se déplace l'objet. En d'autres termes, les seuils P2, P3 et P4 se trouvent encadrés par les seuils P1 et P5 dans la ligne d'assemblage. Selon un mode particulier de réalisation, le seuil P1 est au même emplacement que le seuil P2, et/ou le seuil P4 est au même emplacement que le seuil P5.

L'outil 1 est autorisé à fonctionner par le système de commande selon trois conditions cumulatives :
- l'opérateur presse sa gâchette,
- le transpondeur 27 porté par l'objet est détecté entre les seuils P2 et P4,
- le transpondeur porté par l'outil est détecté entre les seuils P1 et P5.

En d'autres termes, l'outil est autorisé à fonctionner lorsque l'objet se trouve à l'intérieur de la station de travail et que l'outil se trouve dans un volume qui englobe au moins la station de travail.

Dans toutes les autres circonstances, l'outil 1 n'est pas autorisé à fonctionner.

Si le transpondeur porté par l'objet est détecté entre P3 et P4 sans que la tâche ait été réalisée alors une alerte est déclenchée au niveau de l'outil, de façon que l'opérateur en soit immédiatement informé. Cette alerte peut être visuelle, sonore ou vibratoire. L'information que la tâche est réalisée est obtenue par le contrôleur lorsque la visseuse émet vers le contrôleur un compte rendu de serrage effectué, accompagné des résultats de ce serrage.

Selon un perfectionnement, le transpondeur 27 placé sur l'objet 26 se déplaçant sur la ligne d'assemblage comporte un code en mémoire qui est émis lors de la détection du transpondeur par le moyen de localisation 20. Ce code peut être un code informatique émis par radio HF. Le code identifie l'objet 26 sur lequel le transpondeur est fixé. De cette manière, le système peut contrôler que la présence de cet objet est bien prévue sur cette ligne d'assemblage, et peut également associer cet objet en particulier aux mesures réalisées lors des opérations (par exemples des mesures de couples sur une visseuse). Ces mesures sont ensuite enregistrées pour servir d'historique à la fabrication de cet objet.

Selon un perfectionnement, les transpondeurs fixés sur les outils 1 possèdent aussi un code qui est détecté par le moyen de localisation et qui identifie individuellement chaque outil de la station et/ou de la ligne d'assemblage. De cette manière, le contrôleur peut facilement identifier l'outil manipulé par l'opérateur et l'activer avec des paramètres adaptés.

Selon un autre perfectionnement, le serveur 15 vérifie que les positions des objets sur la ligne d'assemblage ne s'écartent pas d'un parcours déterminé. La ligne d'assemblage est représentée par une succession de points de localisation formant un chemin, et la largeur des convoyeurs définit la largeur de ce chemin. Si un transpondeur associé à un objet est détecté en dehors du chemin, alors un message d'alerte est déclenché car cela signifie que cet objet (ou au moins ce transpondeur) est tombé de la ligne d'assemblage, ce qui nécessite une intervention.

L'invention n'est pas limitée aux modes de réalisation qui viennent d'être décrits. En particulier, les objets assemblés par les outils peuvent être de tout type et les opérations exécutées par l'outil peuvent être de toute nature (vissage, taraudage, sectionnement, peinture, ...).

## Revendications

1. Système de commande d'un outil (1) comprenant un contrôleur (10) contrôlant le fonctionnement d'un outil et un moyen de détermination (20) sans contact des positions absolues de transpondeurs fixés sur ledit outil et un objet mobile (26) sur lequel l'outil opère, l'objet mobile (26) effectuant un parcours (25) passant par une succession de positions déterminées dans une ligne d'assemblage, **caractérisé en ce que** le contrôleur autorise le fonctionnement de l'outil dans la ligne d'assemblage lorsque le transpondeur de l'outil se trouve dans un premier espace prédéfini détecté par ledit moyen de détermination (20) de position absolue, ce premier espace prédéfini se situant entre une première position déterminée (P1) et une cinquième position déterminée (P5), et lorsque le transpondeur de l'objet mobile se trouve également entre une seconde position déterminée (P2) et une quatrième position déterminée (P4) détectées par ledit moyen de détermination de position absolue, la seconde position et la quatrième position déterminées (P2, P4) étant encadrées par la première position et la cinquième position déterminées (P1, P5), lesdits moyens de détermination (20) communiquant audit contrôleur (10) lesdites positions absolues desdits transpondeurs fixés sur ledit outil (1) et sur ledit objet mobile (26).

2. Système de commande selon la revendication 1, **caractérisé en ce que** la première position déterminée (P1) est au même emplacement que la seconde position déterminée (P2) et/ou **en ce que** la quatrième position déterminée (P4) est au même emplacement que la cinquième position déterminée (P5).

3. Système de commande selon la revendication 1 ou 2, **caractérisé en ce qu'**il comporte en outre un moyen d'émission d'un signal lumineux et/ou sonore activé lorsque ledit transpondeur de l'objet dépasse une troisième position déterminée (P3) et lorsque les opérations à réaliser entre la seconde position et la troisième position déterminées (P2, P3) n'ont pas été effectuées, la troisième position (P3) se trouvant entre la seconde position et la quatrième position déterminées (P2, P4) dans la ligne d'assemblage.

4. Système de commande selon l'une quelconque des revendications précédentes, **caractérisé en ce que** les positions sont définies en plaçant l'outil à un endroit déterminé, et à introduire une commande au niveau d'une interface utilisateur déclenchant l'acquisition de la localisation du transpondeur dudit outil et l'association des coordonnées de localisation ainsi générées avec les positions (P1, P2, P3, P4, P5) ainsi déterminées.

5. Système de commande selon l'une quelconque des revendications précédentes, **caractérisé en ce que** le moyen de détermination de position capte un code en provenance du transpondeur placé sur l'objet, le code identifiant ledit objet étant au moins associé à des mesures réalisées lors des opérations effectuées par l'outil sur ledit objet mobile.

6. Système de commande selon l'une quelconque des revendications précédentes, **caractérisé en ce que** le moyen de détermination de position capte un code en provenance du transpondeur placé sur l'outil, le code identifiant ledit outil étant pris en compte dans le choix des paramètres appliqués à cet outil lors des opérations sur l'objet mobile.

7. Système de commande selon l'une quelconque des revendications précédentes, **caractérisé en ce que** le moyen de détermination de position comporte une pluralité de caméras filmant le parcours de l'objet mobile (26), les images ainsi produites sont analysées pour détecter la position de l'objet mobile et de l'outil (1).

8. Système de commande selon l'une quelconque des revendications précédentes, **caractérisé en ce que** l'objet mobile (26) se déplace sur un convoyeur.

## Patentansprüche

1. Steuerungssystem eines Werkzeugs (1), umfassend eine Steuereinheit (10), die das Funktionieren eines Werkzeugs steuert, und ein Mittel zur kontaktlosen Bestimmung (20) der Absolutpositionen von Transpondern, die am Werkzeug und am eines mobiles Objekt (26) befestigt sind, an dem das Werkzeug arbeitet, wobei das mobile Objekt (26) einen Weg (25) zurücklegt, der durch eine Abfolge bestimmter Positionen auf einer Montagestraße verläuft, **dadurch gekennzeichnet dass** die Steuereinheit das Funktionieren des Werkzeugs auf der Montagestraße autorisiert, wenn sich der Transponder des Werkzeugs in einem vorgegebenen ersten Raum befindet, der vom Mittel zur Bestimmung (20) der Absolutposition erkannt wird, wobei sich dieser vorgegebene erste Raum zwischen einer bestimmten ersten Position (P1) und einer bestimmten fünften Position (P5) befindet und wenn sich der Transponder des mobilen Objekts auch zwischen einer bestimmten zweiten Position (P2) und einer bestimmten vierten Position (P4) befindet, die durch das Mittel zur Bestimmung der Absolutposition erkannt werden, wobei die bestimmte zweite Position und vierte Position (P2, P4) von der bestimmten ersten Position und fünften Position (P1, P5) eingerahmt sind, wobei die Mittel zur Bestimmung (20) die Absolutpositionen der Transponder, die am Werkzeug (1) und am mobilen Objekt (26) befestigt sind, an die Steuereinheit (10) kommunizieren.

2. Steuerungssystem nach Anspruch 1, **dadurch gekennzeichnet, dass** sich die bestimmte erste Position (P1) an derselben Stelle wie die bestimmte zweite Position (P2) befindet und/oder dass sich die bestimmte vierte Position (P4) an derselben Stelle wie die bestimmte fünfte Position (P5) befindet.

3. Steuerungssystem nach Anspruch 1 oder 2, **dadurch gekennzeichnet, dass** es außerdem ein Mittel zur Emission eines Leucht- und/oder Tonsignals umfasst, das aktiviert wird, wenn der Transponder des Objekts eine bestimmte dritte Position (P3) überholt und wenn die durchzuführenden Vorgänge zwischen der bestimmten zweiten Position und dritten Position (P2, P3) nicht ausgeführt wurden, wobei sich die dritte Position (P3) zwischen der bestimmten zweiten Position und vierten Position (P2, P4) auf der Montagestraße befindet.

4. Steuerungssystem nach einem der vorhergehenden Ansprüche, **dadurch gekennzeichnet, dass** die Positionen definiert werden, indem das Werkzeug an einen bestimmten Ort platziert wird und ein Befehl in einer Benutzerschnittstelle eingegeben wird, der die Erfassung der Positionsbestimmung des Transponders des Werkzeugs und die Verknüpfung der so erzeugten Positionsbestimmungskoordinaten mit den so bestimmten Positionen (P1, P2, P3, P4, P5) auslöst.

5. Steuerungssystem nach einem der vorhergehenden Ansprüche, **dadurch gekennzeichnet, dass** das Mittel zur Bestimmung der Positionen einen Code aus dem am Objekt platzierten Transponder erfasst, wobei der Code, der das Objekt kennzeichnet, mindestens mit Messungen verknüpft wird, die bei Vorgängen, die durch das Werkzeug am mobilen Objekt ausgeführt werden, realisiert werden.

6. Steuerungssystem nach einem der vorhergehenden Ansprüche, **dadurch gekennzeichnet, dass** das Mittel zur Bestimmung der Positionen einen Code aus dem am Werkzeug platzierten Transponder erfasst, wobei der Code, der das Werkzeug kennzeichnet, bei der Wahl der Parameter, die bei den Vorgängen am mobilen Objekt auf das Werkzeug angewandt werden, berücksichtigt wird.

7. Steuerungssystem nach einem der vorhergehenden Ansprüche, **dadurch gekennzeichnet, dass** das Mittel zur Bestimmung der Positionen eine Vielzahl von Kameras umfasst, die den Weg des mobiles Objekts (26) filmen, wobei die so erzeugten Bilder analysiert werden, um die Position des mobilen Objekts und des Werkzeugs (1) zu erkennen.

8. Steuerungssystem nach einem der vorhergehenden Ansprüche, **dadurch gekennzeichnet, dass** sich das mobile Objekt (26) auf einer Förderanlagenbewegt.

## Claims

1. System for controlling a tool (1) comprising a controller (10) controlling the operation of a tool and a means (20) for contactless determination of the absolute positions of transponders fixed on said tool and a mobile object (26) on which the tool operates, the mobile object (26) carrying out a path (25) passing through a succession of determined positions in an assembly line, **characterised in that** the controller authorises the operation of the tool in the assembly line when the transponder of the tool is in a first predefined space detected by said means for determination of the absolute position (20), this first predefined space being located between a first determined position (PI) and a fifth determined position (P5), and when the transponder of the mobile object is also located between a second determined position (P2) and a fourth determined position (P4) detected by said means for determination of the absolute position, the second determined position and fourth determined position (P2, P4) being framed by the first determined position and fifth determined position (PI, P5), said means for determination (20) communicating to said controller (10) said absolute positions of said transponders fixed on said tool (1) and on said moving object (26).

2. System for controlling according to claim 1, **characterised in that** the first determined position (PI) is at the same location as the second determined position (P2) and/or **in that** the fourth determined position (P4) is at the same location as the fifth determined position (P5) .

3. System for controlling according to claim 1 or 2, **characterised in that** it further comprises means for emitting a light and/or sound signal activated when said transponder of the object exceeds a third determined position (P3) and when the operations to be carried out between the second determined position and third determined position (P2, P3) have not been carried out, the third position (P3) being located between the second determined position and fourth determined position (P2, P4) in the assembly line.

4. System for controlling according to any one of the preceding claims, **characterised in that** the positions are defined by placing the tool at a determined location, and in entering a command at a user interface triggering the acquisition of the location of the transponder of said tool and the association of the location coordinates thus generated with the positions (P1, P2, P3, P4, P5) thus determined.

5. System for controlling according to any one of the preceding claims, **characterised in that** the means for determination of the positions gets a code originating from the transponder placed on the object, the code identifying said object being at least associated with the measurements carried out during operations performed by the tool on said mobile object.

6. System for controlling according to any one of the preceding claims, **characterised in that** the means for determination of the positions gets a code originating from the transponder placed on the tool, the code identifying said tool being taken into account in the choice of parameters applied to this tool during operations on the mobile object.

7. System for controlling according to any one of the preceding claims, **characterised in that** the means for determination of the positions includes a plurality of cameras filming the path of the mobile object (26), the images thus produced are analysed to detect the position of the mobile object and of the tool (1).

8. System for controlling according to any one of the preceding claims, **characterised in that** the mobile object (26) displaces on a conveyor.
